# EUROPÄISCHE PATENTANMELDUNG

(11) **EP 0 807 375 A2**
(43) Veröffentlichungstag der Anmeldung: **19.11.1997**
(21) Anmeldenummer: 97107537.9
(22) Anmeldetag: 07.05.1997
(51) Int. Cl.: A01D 34/74

(54) **Arbeitshöhen-Einstellung für ein Gerät**

(30) Priorität: 13.05.1996 US 645366
(71) Anmelder: DEERE & COMPANY, Moline Illinois 61265-8098 (US)
(72) Erfinder: Goman, Gerald Eugene, Horicon, Wisconsin 53032 (US)
(74) Vertreter: Feldmann, Bernhard

(57) **Zusammenfassung**

Bei einer Arbeitshöhen-Einstellung für ein Gerät, insbesondere für ein Mähwerksgehäuse (12) mit einem drehbaren Einstellteil in Form einer Einstellschraube, die mit einer Viergelenkkette zusammenwirkt und bei deren Drehen die Arbeitshöhe des Gerätes verändert wird, ist im Bereich des Einstellteils ein federbelasteter Anlageteil vorgesehen, wobei Einstellteil und Anlageteil zusammenpassende Formteile (Kerbe 52 und Nase 48) aufweisen, die bei einer Umdrehung des Einstellteils wenigstens einmal ineinandergreifen, so dass bei einem Ineinandergreifen die Arbeitshöhe in Stufen festlegbar ist.

## Beschreibung

Die Erfindung bezieht sich auf eine Arbeitshöhen-Einstellung für ein Gerät mit einem drehbaren Einstellteil, bei dessen Drehen die Arbeitshöhe des Gerätes verändert wird.

Eine derartige Arbeitshöhen-Einstellung ist von einem selbstfahrenden Rasenmäher bekannt (US-4 441 306). Bei solchen Geräten sind in einem Mähwerksgehäuse ein oder mehrere Sichelmesser umlaufend angeordnet, wobei das Mähwerksgehäuse im vorliegenden Fall vor einem sogenannten Sitzrasenmäher angeordnet ist und sich auf seinem frontseitigen Ende auf einem Paar Nachlaufräder abstützt. Im einzelnen ist das Mähwerksgehäuse über einen hydraulisch verstellbaren Hubarm an den Sitzrasenmäher angeschlossen, an dem der rückwärtige Teil des Mähwerksgehäuses aufgehängt ist. Zu dieser Aufhängung gehört eine über eine Einstellschraube verstellbare Lasche, die über eine Kette mit dem Hubarm verbunden ist. Durch Verstellen der Einstellschraube lässt sich der rückwärtige Mähwerksgehäuseteil höhenverstellen, während der vordere Teil über eine Kurbel verstellt wird. Ist das Mähwerksgehäuse dagegen zwischen den Fahrzeugachsen aufgehängt, dann stützt sich in der Regel auch der rückwärtige Teil des Mähwerksgehäuses auf Nachlaufrädern ab. Bei sich nur auf Nachlaufrädern auf den Boden abstützenden Mähwerken ist es bekannt, zur Höhenveränderung die Spindeln der Nachlaufräder mit mehr oder weniger Unterlegscheiben zu versehen. Das Hinzufügen oder Wegnehmen von Unterlegscheiben st natürlich zeit- und arbeitsaufwendig, insbesondere, wenn dies während des Arbeitseinsatzes erfolgen muss. Höheneinstell-Vorrichtungen, die keine Unterlegscheiben benutzen, sind in der Regel komplex und nicht immer einsetzbar. Es ist nicht einfach, eine einmal eingestellte Stellung wieder aufzufinden oder bei vorderen und rückwärtigen Nachlaufrädern eine parallele Verstellung zu erreichen.

Die mit der Erfindung zu lösende Aufgabe wird in einer einfacheren Einstellvorrichtung gesehen, wobei die Höhe in Stufen festsetzbar ist. Hierzu st nach der Erfindung im Bereich des Einstellteils ein Anschlagteil vorgesehen, wobei Einstellteil und Anlageteil zusammenpassende Formteile aufweisen, die bei einer Umdrehung des Einstellteils wenigstens einmal ineinandergreifen. Wird nun der Einstellteil von der Bedienungsperson gedreht, so fällt bei jeder vollen Umdrehung der Anschlagteil mindestens einmal in den Einstellteil ein, d. h. in solchen Fällen entspricht eine Umdrehung mindestens einer Stufe. Die Bedienungsperson kann das Einfallen oder Einrasten hören bzw. fühlen. Bespielsweise durch Zählen der Einfallgeräusche, weiß sie, in wievielen Stufen höhenverstellt wurde. Wird an mehreren Stellen höhenverstellt, kann infolge des Zählens der Einstellteil mit derselben Zahl Umdrehungen gedreht werden.

Im einzelnen kann der Einstellteil mit einem Kopfstück versehen und der Anlageteil in Richtung auf das Kopfstück vorgespannt sein, wobei als Formteile eine Kerbe in dem Kopfstück und ein Vorsprung an dem Anlageteil dienen. Auf diese Weise wird der Vorsprung, der die Form einer Nase haben kann, gegen das Kopfstück gedrückt, so dass die Nase leicht in die Kerbe mit einem hörbaren "Klick" einfallen kann. Durch Zählen der einzelnen "Klicks" lässt sich die Höheneinstellung bestimmen. Im Rahmen der Erfindung kann dies natürlich auch durch eine optische Anzeige unterstützt werden. Zweckmäßig kann der Einstellteil als Einstellschraube und der Anlageteil als Blattfeder ausgebildet sein, wobei es sich dann anbietet, das Kopfstück als Sechskant auszubilden, damit es leicht verstellt werden kann, und das Kopfstück der Einstellschraube mit einem Bund zu versehen, der eine einzige radiale Kerbe aufweist. Somit kann der Vorsprung auf dem Umfang des Bundes leicht gleiten und eine Umdrehung entspricht einer Höhenstufe.

Damit die Umdrehungen des Einstellteils sich schnell in eine Höhenverstellung umsetzen lassen, sieht die Erfindung ferner vor, dass der Einstellteil zwischen zwei Lenkern eines vier Gelenke aufweisenden Gestänges vorgesehen ist, über das sich das Gerät auf dem Boden abstüzt und dass jeder Lenker mit einem Befestigungsblock versehen ist, wobei der Einstellteil in einem Befestigungsblock drehbar und achsial unverschiebbar angeordnet und in den anderen Befestigungsblock schraubbar ist. Auf diese Weise können sich die beiden Lenker bei einer Drehung am Einstellteil aufeinander zu- oder voneinander fortbewegen. Vorteilhaft stützt sich das Gerät dabei über mindestens zwei Räder auf dem Boden ab, wobei zwischen dem Gerät und jedem Rad ein der Gelenke aufweisendes Gestänge mit jeweils einem Einstellteil vorgesehen ist. Zweckmäßig sind die Räder als Nachlaufräder ausgebildet.

Besonders vorteilhaft lässt sich die Erfindung an einem an einem Rasentraktor höhenverstellbar angeschlossenen Mähwerk einsetzen.

In der Zeichnung ist ein nachfolgend näher erläutertes Ausführungsbeispiel der Erfindung dargestellt. Es zeigt:
- Fig. 1: eine Arbeitshöhen-Einstellung in Seitenansicht, wobei die niedrigste Arbeitshöhe des Mähwerkes in gestrichelten Linien angedeutet ist,
- Fig. 2: die Arbeitshöhen-Einstellvorrichtung nach Fig. 1 in der Draufsicht und
- Fig. 3: eine Einstellschraube in einer Ansicht von oben.

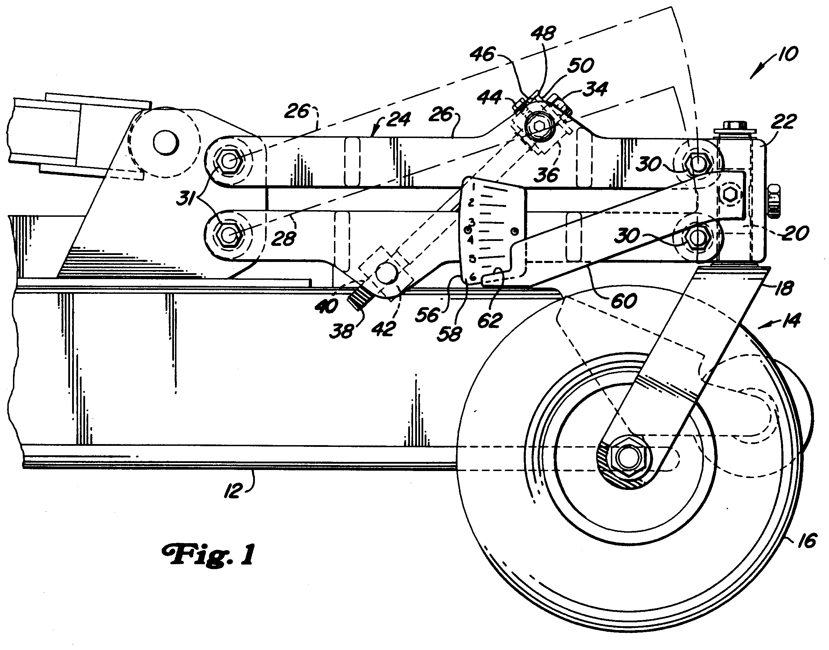

In den Fig. 1 bis 3 der Zeichnung sind Einzelheiten einer Arbeitshöhen- oder Schnitthöhen-Einstellung 10 für die Schneideinheit eines Rasenmähers dargestellt. Das Mähwerksgehäuse ist mit 12 bezeichnet und über eine nicht dargestellte Gestängevorrichtung, beispielsweise in Viergelenkform, an einem Rasentraktor angeschlossen. In dem Mähwerksgehäuse läuft wenigstens ein in der Zeichnung nicht dargestelltes Sichelmesser um eine vertikale Achse um. Im Arbeitseinsatz stützt sich jede Schneideinheit über mehrere Nachlaufräder 14 auf dem Boden ab. In der Zeichnung ist nur ein einziges erkennbar. Sein Reifen ist mit 16, sein Gabelteil mit 18 und sein Vertikalbolzen ist mit 20 bezeichnet. Der Vertikalbolzen 20 ist in einem Befestigungsteil 22 drehbar angeordnet, wobei der Befestigungsteil 22 über ein vier Gelenke aufweisendes Gestänge 24 an das Mähwerksgehäuse 12 angeschlossen ist. Hierbei sind der obere Lenker 26 und der untere Lenker 28 über Gelenkbolzen 30 mit dem Befestigungsteil 22 und über Gelenkbolzen 31 mit dem Mähwerksgehäuse 12 verbunden. Über die die Schneideinheit an den Rasentraktor anschließende Gestängevorrichtung und über das jedes Nachlaufrad 14 mit dem Mähwerksgehäuse 12 verbindende Gestänge 24 wird die Schneideinheit immer in Horizontallage gehalten, gleichgültig welche Schnitthöhe eingestellt ist.

Zu der Schnitthöhen-Einstellung 10 gehört ein drehbarer in den Ansprüchen als Einstellteil bezeichneter Stangenteil 32 in Form einer Einstellschraube mit einem einen Bund aufweisenden Sechskantkopf 34. Der Stangenteil 32 ist drehbar in einem ersten Befestigungsblock 36 aufgenommen, der seinerseits an dem oberen Lenker 26 schwenkbar angebracht ist. Das untere Ende 38 des Stangenteils 32 ist mit Gewinde versehen und in einem zweiten Befestigungsblock 42 eingeschraubt, der seinerseits an dem unteren Lenker 28 schwenkbar angebracht ist. Der Befestigungsblock 36 an dem oberen Lenker 26 ist noch mit einem Anschlagteil in Form einer Blattfeder 46 versehen, die über zwei Schrauben 44 an dem Befestigungsblock angeschlossen ist. Die Feder hat einen vorspringenden Teil 48 oder eine Nase, die über die Feder gegen den Bund 50 des Sechskantkopfes 34 gedrückt wird. Der Bund 50 seinerseits ist mit einer die Nase satt aufnehmenden Kerbe 52 an seinem äußeren Umfang versehen. Wenn die als Kerbe und Nase ausgebildeten Formteile ineinandergreifen, ist ein selbsttätiges Verdrehen des Stangenteils 32 ausgeschlossen.

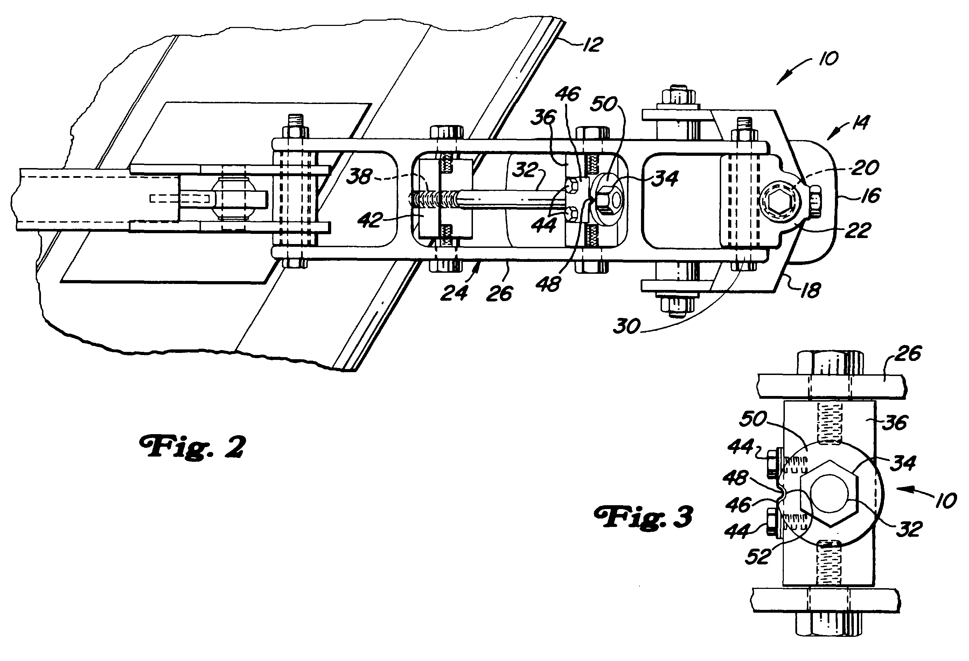

Um nun die Schnitthöhe ein- bzw. verstellen zu können, muss die Bedienungsperson den Sechskantkopf 34 drehen. Dabei dreht sich der Stangenteil 32 tiefer in den zweiten Befestigungsblock hinein oder stärker heraus. In jedem Fall verstellt sich dabei der zweite Befestigungsblock 42 auf den Stangenteil nach oben oder nach unten, und zwar in Abhängigkeit von der Drehrichtung, wobei sich die beiden Lenker 26 und 28 aufeinander zu- oder voneinander fortbewegen und um ihre Schwenkbolzen 30 und 31 verschwenken. Im einzelnen entfernt sich bei einem Drehen des Sechskantkopfes 34 entgegen dem Uhrzeigersinn mit Bezug auf Fig. 3 der zweite Befestigungsblock 42 von dem Sechskantkopf bzw. von dem ersten Befestigungsblock 36. Da aber die Befestigungsblöcke 36 und 42 unverschiebbar an dem oberen und unteren Lenker 26 und 28 angeschlossen sind, löst die Bewegung der Befestigungsblöcke eine korrespondierende Bewegung der Lenker 26 und 28 aus. Wenn sich nun die Befestigungsblöcke voneinander entfernen, werden sich auch die Anschlussstellen der Befestigungsblöcke an den Lenkern voneinander entfernen. Da die Lenker an ihrem einen Ende über die Anschlussbolzen 31 mit dem Mähwerksgehäuse 12 verbunden sind, werden bei einem sich voneinander Entfernen der Befestigungsblöcke der obere und der untere Lenker 26 und 28 mit Bezug auf das Mähwerksgehäuse 12 nach oben in die in Fig. 1 in gestrichelten Linien eingezeichnete Stellung schwenken. Andererseits sind die vorderen Enden der beiden Lenker 26 und 28 an das Nachlaufrad 14 angelenkt, so dass die Lenker mit Bezug auf das Nachlaufrad nach unten schwenken, so dass das Mähwerksgehäuse letztlich nach unten verstellt wird. Bei einem Drehen an dem Sechskantkopf entgegen dem Uhrzeigersinn wird somit die Schnitthöhe verringert. Auf der anderen Seite nähert sich bei einem Drehen des Sechskantkopfes 34 im Uhrzeigersinn mit Bezug auf Fig. 3 der zweite Befestigungsblock 42 an den Sechskantkopf bzw. an den ersten Befestigungsblock 36 an. Da aber die Befestigungsblöcke 36 und 42 unverschiebbar an dem oberen und unteren Lenker 26 und 28 angeschlossen sind, löst die Bewegung der Befestigungsblöcke eine korrespondierende Bewegung der Lenker 26 und 28 aus. Wenn sich nun die Befestigungsblöcke aufeinander zu bewegen, werden sich auch die Anschlussstellen der Befestigungsblöcke an den Lenkern aufeinander zu bewegen. Da die Lenker an ihrem einen Ende über die Anschlussbolzen 31 mit dem Mähwerksgehäuse 12 verbunden sind, werden bei einem sich aufeinander Zubewegen der Befestigungsblöcke der obere und der untere Lenker 26 und 28 mit Bezug auf das Mähwerksgehäuse 12 nach unten schwenken, bis sie die in Fig. 1 in voll ausgezogenen Linien eingezeichnete Stellung erreichen. Andererseits sind die vorderen Enden der beiden Lenker 26 und 28 an das Nachlaufrad 14 angelenkt, so dass die Lenker mit Bezug auf das Nachlaufrad nach oben schwenken, so dass das Mähwerksgehäuse letztlich nach oben verstellt wird. Bei einem Drehen an dem Sechskantkopf im Uhrzeigersinn wird somit die Schnitthöhe vergrößert.

Das bevorzugte Ausführungsbeispiel ermöglicht der Bedienungsperson aber auch, festzustellen, um wie viel sich die Schnitthöhe verändert hat. Dies ist deshalb möglich, weil bei jeder Umdrehung des Sechskantkopfes 34 die vorspringende Nase 48 der Blattfeder 46 in die in dem Bund 50 des Sechskantkopfes vorgesehene Kerbe 52 einmal einrastet. Dieses Einrasten kann die Bedienungsperson durch ein deutlich hörbares "Klick" wahrnehmen aber auch fühlen. Dabei entspricht eine Umdrehung des Sechskantkopfes einer Höhenänderung des Mähwerksgehäuses von 6,35 mm. Durch Zählen der "Klicks" kann die Bedienungsperson auf die Höhenänderung schließen. Sind an einer Schneideinheit mehrere Nachlaufräder vorgesehen, so empfiehlt es sich, dass dann alle wie das bevorzugte Ausführungsbeispiel ausgestaltet sind. Durch Zählen der "Klicks" lassen sich dann alle Gestänge 24 gleichmäßig verstellen, so dass die Schneideinheit schließlich wieder die gewünschte Horizontallage einnimmt. Entsprechendes gilt natürlich auch, wenn mehrere Schneideinheiten an einem Rasentraktor vorgesehen sind, was in der Regel der Fall ist.

Durch die Elastizität der Blattfeder 46 wird die vorspringende Nase 48 gegen den Umfang des Bundes 50 des Sechskantkopfes gedrückt und kann damit leicht in die Kerbe 52 einfallen, aber auch bei einem Weiterdrehen leicht wieder aus dieser austreten, da die Seitenkanten von Nase und Feder entsprechend geformt sind, beispielsweise gerundet oder rampenartig. Andererseits sind Nase und Kerbe derart bemessen, dass der Sechskantkopf hinreichend gegen selbsttätiges Drehen gesichert ist, wenn die Nase in die Kerbe eingetreten ist. Letztlich wird das Mähwerksgehäuse 12 auf der eingestellten Höhe gehalten, wenn Nase und Kerbe ineinandergreifen.

Schließlich kann noch eine Anzeigevorrichtung 54 vorgesehen werden, die der Bedienungsperson anzeigt, welche Schnitthöhe bei welcher Nachlaufradeinstellung eingestellt ist. Hierzu ist an den unteren Lenker 28 eine Platte 56 angeschlossen, auf der eine entsprechende Anzeige 58 in Form von Ziffern und Messstrichen angebracht ist. An dem Befestigungsteil 22 ist ein Zeiger 60 angeschlossen, der sich bis zu der Platte 56 erstreckt. Bei einer Verstellung des Mähwerkgehäuses nach oben oder unten, verstellt sich die Platte 56 gegenüber dem Zeiger 60. Die Spitze 62 des Zeigers ist nahe den Zahlen auf der Platte 56, die die Schnitthöhe angeben. Die Bedienungsperson kann damit die Schnitthöhe ablesen.

## Patentansprüche

1. Arbeitshöhen-Einstellung für ein Gerät mit einem drehbaren Einstellteil, bei dessen Drehen die Arbeitshöhe des Gerätes verändert wird, gekennzeichnet durch einen im Bereich des Einstellteils vorgesehenen Anlageteil, wobei Einstellteil und Anlageteil zusammenpassende Formteile aufweisen, die bei einer Umdrehung des Einstellteils wenigstens einmal ineinandergreifen.

2. Arbeitshöhen-Einstellung nach Anspruch 1, dadurch gekennzeichnet, dass der Einstellteil mit einem Kopfstück versehen und der Anlageteil in Richtung auf das Kopfstück vorgespannt ist, wobei als Formteile eine Kerbe (52) in dem Kopfstück und ein Vorsprung (48) an dem Anlageteil dienen.

3. Arbeitshöhen-Einstellung nach Anspruch 1 und 2, dadurch gekennzeichnet, dass der Einstellteil als Einstellschraube (32) und der Anlageteil als Blattfeder (46) ausgebildet sind.

4. Arbeitshöhen-Einstellung nach Anspruch 3, dadurch gekennzeichnet, dass das Kopfstück der Einstellschraube (32) mit einem Bund (50) versehen ist, der eine einzige radiale Kerbe (52) aufweist.

5. Arbeitshöhen-Einstellung nach einem oder mehreren der vorherigen Ansprüche, dadurch gekennzeichnet, dass der Einstellteil zwischen zwei Lenkern (26, 28) eines vier Gelenke aufweisenden Gestänges (24) vorgesehen ist, über das sich das Gerät auf dem Boden abstüzt.

6. Arbeitshöhen-Einstellung nach Anspruch 5, dadurch gekennzeichnet, dass jeder Lenker (26, 28) mit einem Befestigungsblock (36, 42) versehen ist, wobei der Einstellteil in einem Befestigungsblock drehbar und achsial unverschiebbar angeordnet und in den anderen Befestigungsblock schraubbar ist.

7. Arbeitshöhen-Einstellung nach Anspruch 5 oder 6, dadurch gekennzeichnet, dass sich das Gerät über mindestens zwei Räder (14) auf dem Boden abstützt, wobei zwischen dem Gerät und jedem Rad (14) ein vier Gelenke aufweisendes Gestänge (24) mit jeweils einem Einstellteil vorgesehen ist.

8. Arbeitshöhen-Einstellung nach einem oder mehreren der vorherigen Ansprüche, dadurch gekennzeichnet, dass das Gerät als ein an einem Rasentraktor höhenverstellbar angeschlossenes Mähwerk ausgebildet ist.
